(19) Europäisches Patentamt
European Patent Office
Office européen des brevets

(11) **EP 2 798 540 B1**

(12) **EUROPEAN PATENT SPECIFICATION**

(45) Date of publication and mention
of the grant of the patent:
**22.01.2020   Bulletin 2020/04**

(51) Int Cl.:
***G06F 16/951*** *(2019.01)*

(21) Application number: **12862814.6**

(22) Date of filing: **14.12.2012**

(86) International application number:
**PCT/US2012/069603**

(87) International publication number:
**WO 2013/101489 (04.07.2013 Gazette 2013/27)**

(54) **EXTRACTING SEARCH-FOCUSED KEY N-GRAMS AND/OR PHRASES FOR RELEVANCE RANKINGS IN SEARCHES**

EXTRAKTION VON SUCHZENTRIERTEN TASTEN-N-GRAMMEN UND/ODER SÄTZEN ZUR RELEVANZREIHUNG BEI SUCHVORGÄNGEN

EXTRACTION DE N-GRAMMES ET/OU DE PHRASES CLÉS DE FOCALISATION DE RECHERCHE POUR CLASSEMENTS PAR PERTINENCE DANS DES RECHERCHES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.12.2011   US 201113339532**

(43) Date of publication of application:
**05.11.2014   Bulletin 2014/45**

(73) Proprietor: **Microsoft Technology Licensing, LLC Redmond, WA 98052 (US)**

(72) Inventors:
  • **HU, Yunhua**
    **Redmond, Washington 98052-6399 (US)**
  • **LI, Hang**
    **Redmond, Washington 98052-6399 (US)**

(74) Representative: **CMS Cameron McKenna Nabarro Olswang LLP**
    **Cannon Place**
    **78 Cannon Street**
    **London EC4N 6AF (GB)**

(56) References cited:
**US-A1- 2005 268 224     US-A1- 2008 033 932
US-A1- 2009 037 401     US-A1- 2009 248 657
US-A1- 2009 276 399     US-A1- 2010 082 510
US-A1- 2010 082 582     US-A1- 2010 169 305**

**Description**

BACKGROUND

Relevance ranking, which is one of the most important processes performed by a search engine, assigns scores representing the relevance degree of documents with respect to the query and ranks the documents according to their scores. In web search, a relevance ranking model assigns scores representing a relevance degree of the web pages with respect to the query and ranks the pages according to the scores. A relevance ranking model may utilize information such as term frequencies of query words in the title, body, URL, anchor texts, and search log data of a page for representing the relevance.

Traditionally, a relevance ranking model is manually created with a few parameters that are tuned. Recently, machine learning techniques, called learning to rank, have also been applied into ranking model construction. Both the traditional models such as Vector Space Model, BM25 (also known as Okapi BM25), Language Model for Information Retrieval, Markov Random Field, and the learning to rank models make use of n-grams existing in the queries and documents as features. In all these techniques, the queries and documents are viewed as vectors of n-grams. Intuitively, if the n-grams of a query occur many times in the document, then it is likely that the document is relevant to the query.

There are popular web pages with rich information such as anchor texts and search-query log data. For those pages, it is easy for the ranking model to predict the relevance of the pages with respect to a query and assign reliable relevance scores to them. In contrast, there are also web pages which are less popular and do not contain sufficient information. It becomes a very challenging problem to accurately calculate the relevance for these pages with insufficient information.

As discussed herein, web pages with many anchor texts and associated queries in search-query log data are referred to as head web pages, and web pages having less anchor texts and associated queries are referred to as tail pages. That means that if there is a distribution of visits of web pages, then the head pages should have high frequencies of visits, while the tail pages have low frequencies of visits. One of the hardest problems in web search is to improve the relevance rankings of tail web pages.

<US 2010/0169305 A1 (Patterson) discloses an indexing system for indexing large amounts of documents (websites). It comprises posting lists of good phrases, wherein each posting list contains entries of documents containing the good phrase. In a phrase identification process, phrases in a document are considered as good phrases when they appear in a given good phrase list of the indexing system. When not, they may be considered as possible phrases. Possible phrases can become good phrases if the frequency of appearance of the phrase and the number of documents that the phrase appears in, indicate that it has sufficient usage as semantically meaningful phrase.

US 2010/0082582 A1 (Gao et al.) discloses a system for ranking search results to a user query using a document-based ranker, ranking the relevance of a document in a result list based on a term frequency, and using a log-based ranker, which increases the relevance of a document according to its popularity. The influence of the log-based ranker in the global result ranking is based on the count of query-identifier pair instances that include the query in log data.

US 2010/0082510 A1 (Gao et al.) discloses a search result ranker trained with automatically-generated samples. In an example, user interests are inferred from user interactions with search results for a particular query so as to determine respective relevance scores associated with respective query-identifier pairs of the search results. Query-identifier-relevance score triplets are formulated from the respective relevance scores associated with the respective query-identifier pairs. The query-identifier-relevance score triplets are submitted as training samples to a search result ranker. The search result ranker is trained as a learning machine with multiple training samples of the query-identifier-relevance score triplets. A weight vector is used by the ranker for computing a relevance score using a feature vector extracted from a query-identifier pair. The weight vector is learned from training samples.

SUMMARY

A computer-implemented method, a computing system and computer-readable media of searching electronic content are defined in appended set of claims.

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

BRIEF DESCRIPTION OF THE DRAWINGS

The detailed description is described with reference to the accompanying figures. In the figures, the left-most digit(s) of a reference number identifies the figure in which the reference number first appears. The same reference numbers in different figures indicate similar or identical items.

FIG. 1 is a schematic diagram of an illustrative environment to provide search results in which search-focused information is extracted from electronic documents.

FIG. 2 is a schematic diagram of an electronic document.

FIG. 3 is a block diagram of an illustrative data structure for recording search-focused n-grams and/or phrase data.

FIG. 4 is a flow diagram of an illustrative process to extract search-focused information from electronic document.

FIG. 5 is a flow diagram of an illustrative process to provide relevancy rankings based at least in part on the extracted search-focused.

FIG. 6 is a flow diagram of an illustrative process to extract search-focused information from electronic documents and to provide rankings of search results.

FIG. 7 is a block diagram of an illustrative computing device that may be deployed in the environment shown in FIG. 1.

## DETAILED DESCRIPTION

Overview

In some embodiments, relevancy ranking of electronic documents, including tail and head electronic documents, may include: extracting search-focused information from electronic documents; taking key n-grams as the representations of search focused information; employing learning to rank techniques to train a key n-gram and/or phrase extraction model based at least on search-query log data; and employing learning to rank techniques to train a relevance ranking model based at least on search focused key n-grams as features.

In some instances, search-queries of an electronic document can be viewed as good queries for searching the electronic document. Search-query log data can be used to train a key n-gram and/or phrase extraction model. Since there is more information for head electronic documents in a search-query log than for tail electronic documents, the model may be trained with information from head electronic documents and then applied to tail electronic documents.

Key n-gram extraction may be used to approximate keyphrase extraction. Queries, particularly long queries are difficult to segment, for example, "star wars anniversary edition lego darth vader fighter". If the query is associated with an electronic document in the search-query log data, then all the n-grams in the query may be used as key n-grams of the electronic document. In this way, query segmentation, which is difficult to be conducted with high accuracy, may be skipped.

In some embodiments, relevancy ranking of a tail electronic document may be approached by extracting "good queries" from the electronic document, in which "good queries" are most suitable for searching the electronic document. In some instances, it may be assumed that that data sources for the extraction are limited to specific portions of the electronic document, such as, for example, a title, a URL, and a main body of a web page. The specific portions are typically common to both head and tail electronic documents. When searching with the good queries of an electronic document, the electronic document should be relevant to the queries. Such kind of extraction task is referred to herein as search-focused extraction.

Search-focused key n-grams may be extracted from electronic documents such as web pages and may be used in relevance rankings, particularly for tail electronic document relevance. The key n-grams compose good queries for searching the electronic documents.

In some embodiments, key n-gram extraction is chosen, rather than key phrase extraction, for the following reasons. First, conventional relevance models, no matter whether or not they are created by machine learning, usually only use n-grams of queries and documents. Therefore, extraction of key n-grams is more than enough for enhancing the conventional ranking model performance. Second, the use of n-grams means that segmentation of queries and documents need not be conducted, and thus there are no errors in segmentation.

In some embodiments, a learning to rank approach to the extraction of key n-grams may be employed. The problem is formalized as ranking key n-grams from a given electronic document. In some instances, the importance of key n-grams may be only meaningful in a relative sense, and thus categorization decisions on which are important n-grams and which are not-important n-grams may be avoided. In some instances, position information (e.g., where an n-gram is located in an electronic document) and term frequencies may be used as features in the learning to rank model. Search-query log data may be used as training data for learning a key n-gram and/or phrase extraction model. In instances in which the electronic document is a web page, position information, term frequencies, html tags of n-grams in the web page, and/or anchor text data as training data, etc., may be used as training data for learning a key n-gram and/or phrase extraction model.

It may be assumed that the statistical properties of good queries associated with an electronic document can be learned and applied across different electronic documents. The objective of learning may be exact accurate extraction of search-focused key n-grams, because the queries associated with electronic documents are sets of key n-grams for searching. Since there is much search-query log data available for head electronic documents, the key n-gram and/or phrase extraction model may be learned mainly from head electronic documents. In this way, the knowledge acquired from the head electronic documents may be extended and propagated to tail electronic document, and thus effectively address tail electronic document relevance ranking. Further, the learned key n-gram and/or phrase extraction model may help improve the relevance ranking for head electronic documents as well.

The extracted key n-grams of an electronic document may also have scores or weights or rankings representing the strength of key n-grams. Learning to rank approaches may be employed to train a relevance ranking model based at least on the key n-grams and their scores as additional features of the relevance ranking model.

As described herein, performance for relevance ranking performance is good when only unigrams are used. However, the performance may be further improved when bigrams and trigrams are also included. Furthermore, in some embodiments, the top 20 key n-grams extraction achieves the best performance in relevance ranking. In addition, it has been observed that the use of scores of key n-grams can further enhance relevance ranking.

As discussed herein, an n-gram is defined as n successive words within a short text which is separated by punctuation symbols, and in the case of electronic documents being HTML (hypertext markup language) formatted, an n-gram is defined as n successive words within a short text which is separated by punctuation symbols and special HTML tags. In some instances, HTML tags provide a natural separation of text, e.g., "<h1>Experimental Result</h1>" indicates that "Experimental Result" is a short text. However, some HTML tags do not mean a separation, e.g., "<font color="red">significant</font> improvement".

As discussed herein, electronic documents that are accessed most frequently are referred to as "head" electronic documents and those that are accessed least frequently are referred to as "tail" electronic documents. Electronic documents having an access rate in the top 80 percentile or above may be considered "head" electronic documents while those in bottom 20 percentile or below may be considered "tail" electronic documents. For example, an electronic document such as a web page that has more than 600,000 "clicks" (in which a click indicates an instance of the web page being accessed) in a search-query log data of the search provider in one year may be a "head" web page, while another web page which only has 23 clicks over the same year may be a tail web page. The "head" electronic documents may be used in training a key n-gram and/or phrase extraction model that may be applied to the "tail" electronic documents.

As discussed below, candiate n-grams and/or phrases have low relavancy and key n-gram and/or phrases have high relevancy. An example of a key n-gram may be one that matches an n-gram of a search query. For example, a search-query for "Brooklyn DODGERS" includes a unigram of "Brooklyn" and another unigram of "DODGERS." N-grams in an electronic document that match either one of the unigrams "Brooklyn" and "DODGERS" are more likely to be relavant than n-grams do not match. Features and/or characteristics of key n-grams in one electronic document may be used to predict key n-grams in another electronic document. In some instances, features and/or characteristics of key n-grams in head electronic documents may be used to predict key n-grams in tail electronic documents.

The processes and systems described herein may be implemented in a number of ways. Example implementations are provided below with reference to the following figures.

## Illustrative Environment

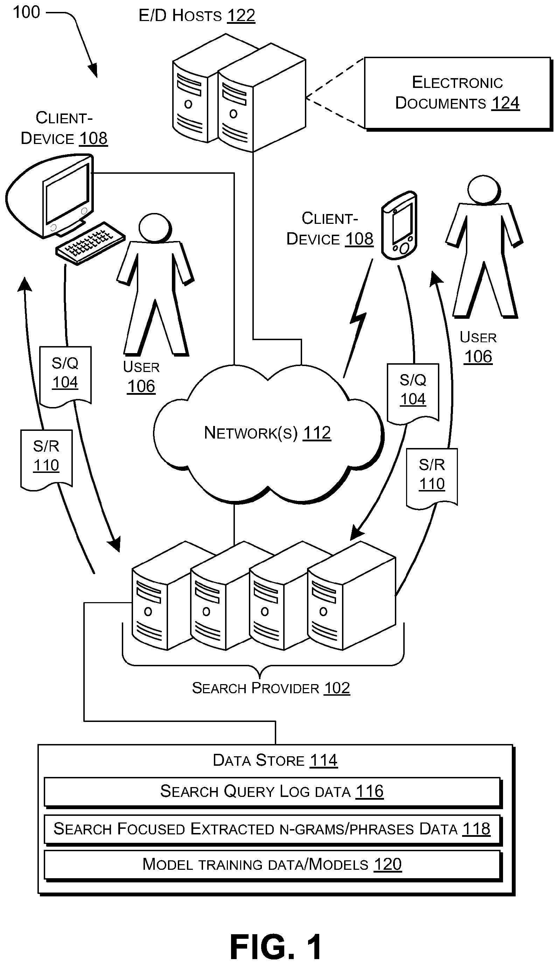

FIG. 1 is a schematic diagram of an illustrative environment 100 to provide search results in which search-focused information is extracted from electronic documents such as web pages. The environment includes a search provider 102 that receives search-queries (SQ) 104 from users 106 having client-devices 108 and provides the users 106 with search results (S/R) 110.

The users 106 may communicate with the search provider 102 via one or more network(s) 112 using the client-devices 108. The client-devices 108 may be mobile telephones, smart phones, tablet computers, laptop computers, netbooks, personal digital assistants (PDAs), gaming devices, media players, or any other computing device that includes connectivity to the network(s) 112. The network(s) 112 may include wired and/or wireless networks that enable communications between the various entities in the environment 100. In some embodiments, the network(s) 112 may include local area networks (LANs), wide area networks (WAN), mobile telephone networks (MTNs), and other types of networks, possibly used in conjunction with one another, to facilitate communication between the search provider 102 and the user 106.

The search provider 102 may have data store(s) 114. The data store(s) 114 may include servers and other computing devices for storing and retrieving information. The data store(s) 114 may store search-query log data 116, search-focused extracted n-grams and/or phrases data 118, and model training data and/or models 120.

The search-query log data 116 may include, but is not limited to, search queries, results of search-queries 104 in which a result of a search-query 104 may be a list of electronic documents (e.g., web pages), rankings of electronic documents listed in the search results, electronic documents access information that may be indicative of a number of times, and/or a percentage of times, that an electronic document listed in a search result is accessed, electronic document locators which may be indicative of a location of an electronic document listed in a search result. A non-limiting example of an electronic document locator may be a Uniform Resource Locator (URL) of a web page. The search-query log data 116 may be mined for finding key n-gram and/or phrase extraction training data.

The search-focused n-grams and/or phrases data 118 may include, but is not limited to, n-grams and/or phrases that have been extracted from electronic documents by a trained key n-gram and/or phrase extraction model.

The model training data and models 120 may include trained machine-learned models such as a key n-gram and/or phrase extraction model and a relevance ranking model. The models may be trained based at least in part on model training data 120 using machine learning techniques such as, but not limited to, support vector machine (SVM) and Ranking SVM.

The environment 100 further includes electronic document (E/D) hosts 122. The electronic document hosts 122 may store and provide electronic documents 124. In some instances, the electronic document hosts 122 may be computing devices such as, but not limited to, servers and/or web servers. In some instances, the electronic documents 124 may be web pages.

**Illustrative Electronic Document**

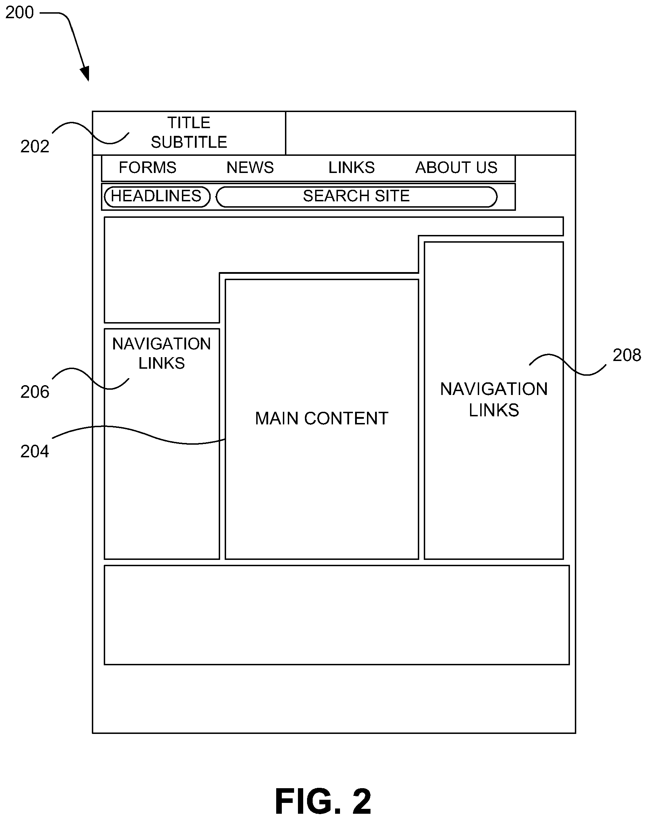

FIG. 2 is a schematic diagram of an electronic document 200. In the discussion below, the electronic document 200 is discussed in terms of a web page. However, such discussion is non-limiting and is provided merely for providing a concrete example of an electronic document.

The search provider 102 may record, over a time period (e.g., a month, a year, etc.), the number of times that electronic documents 200 listed in search results 110 are accessed by users 106.

Frequently, different electronic documents 200 may have the same or similar patterns to them. These patterns may be used to, among other things, extract key n-grams and/or phrases from electronic documents and to help train relevance ranking models.

The electronic document 200 may include sections 202-208. For example, section 202 may include a title and subtitle of the electronic document 200, and section 204 may include the the main content of the electronic document 200. Sections 206 and 208 may include navigation links. For example, section 206 may include navigation links to other electronic documents that are in the same website as electronic document 200, and section 208 may include navigation links to electronic documents in other websites.

Formatting information, term frequency information, and position information, and other information of the electronic document 200 may be used in determining whether an n-gram and/or a phrase is likely to be a key n-gram and/or phrase.

For example, sections 202 and 204 may include N-grams and/or phrases some of which may be candidate n-grams and/or phrases and others of which may be key n-gram and/or phrases. N-grams and/or phrases in sections 202, 204 that match n-grams of a search-query 104 are likely to be key n-grams. N-grams and/or phrases in sections 202, 204 may be correlated with the search-query log data 116 to identify key n-grams and/or phrases (e.g., n-grams and/or phrases in sections 202, 204 that match n-grams of the search-query 104 may be identified as key n-grams and/or phrases), and then features and/or characteristics of the key n-grams and/or phrases are identified - e.g., key n-grams and/or phrases in the title may have a font size that twice the font size of n-grams in the main content; key n-grams and/or phrases may be emphasised (e.g., bold, itialicized, underlined, and/or color font); key n-grams and/or phrases may appear between two particular HTML tags. Key n-grams and/or phrases in another electronic document may be predicted based at least in part on similariteis between the features and/or characteristics of the key n-grams and/or phrases in electronic document 200 and the features and/or characteristics of the key n-grams and/or phrases in electronic document.

**Illustrative Search-Focused Data**

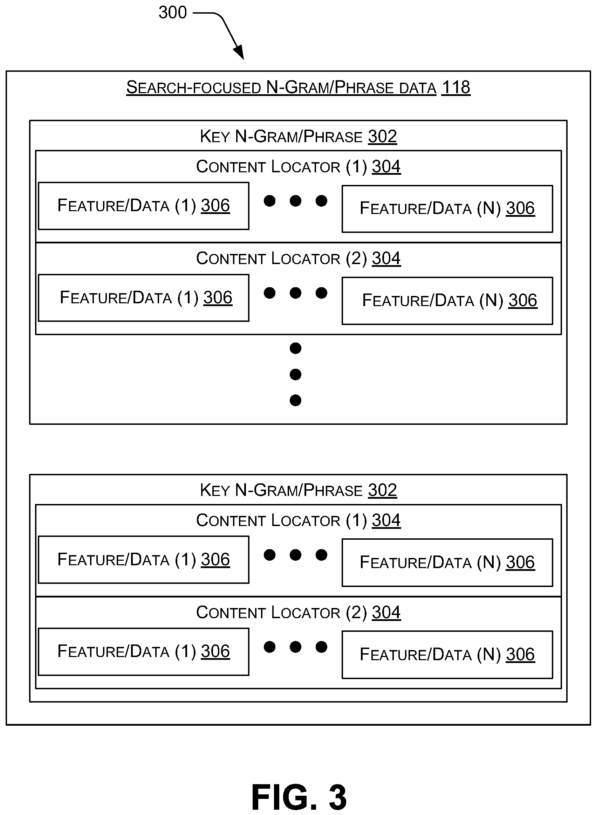

FIG. 3 is a block diagram of an illustrative data structure 300 for recording search-focused n-grams and/or phrase data 118. The search-focused n-gram and/or phrase data 118 includes key n-grams and/or phrases 302. The key n-grams and/or phrases 302 are extracted from electronic documents 124 by the trained key n-gram and/or phrase extraction model.

For each key n-gram and/or phrase 302, there may be a number of content locators 304. Each content locator 304 provides information for locating a source electronic document 124 that contains the corresponding key n-gram and/or phrase 302. For example, in some instances, the electronic documents 124 may be web pages, and in that case, the content locators 304 may be URLs for the web pages.

For each content locator 304, there may be features/data 306 that are extracted from the electronic documents 124 by the trained key n-gram and/or phrase extraction model. Included in the features/data 306 may be a weight for the corresponding key n-gram and/or phrase 302.

As a non-limiting example, a key n-gram might be the word "Xanadu." The trained key n-gram and/or phrase extraction model may identify 1,000,000 of the electronic documents 124 as containing the word "Xanadu" as a key n-gram and may record the content locators 304 for each of the identified electronic documents 124. The trained key n-gram and/or phrase extraction model may identify and record features and/or data 306 related to the key n-gram "Xanadu" in the identified electronic documents 124. Features and/or data 306 may include the frequency of occurrence of the key n-gram in the identified electronic document 124, location information of the key n-gram in the identified electronic document 124, relevancy information for the identified electronic document 124, weight, etc. In a first one of the electronic documents, "Xanadu" might be in the title, and in a second one of the electronic documents, "Xanadu" might be in a link to yet another electronic document. In the first electronic document, "Xanadu" might be the topmost key n-gram of all of the n-grams of the first electronic document, and in the second electronic document, "Xanadu" might be a middle tier key n-gram of all of the n-grams of the second electronic document. Corresponding weights for the key n-gram "Xanadu" in both the first electronic document and the second electronic document may be recorded by record features and/or data 306.

**Illustrative Operation**

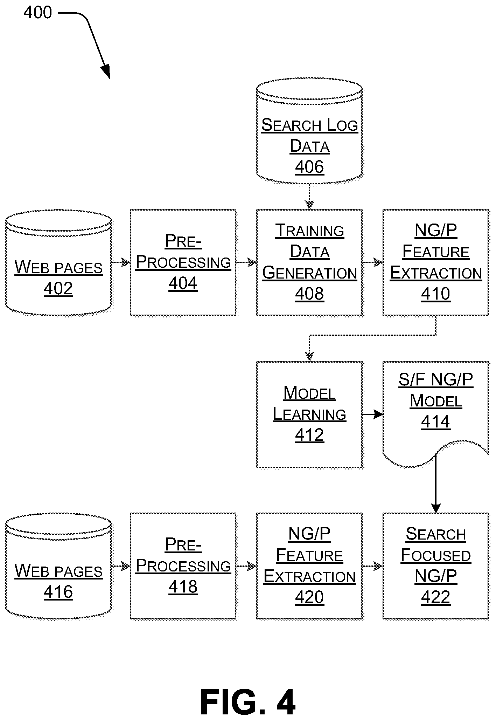

FIG. 4 is a flow diagram of an illustrative process 400 to extract search-focused information from electronic documents 154. The process 400 is illustrated as a collection of blocks in a logical flow graph, which represent a sequence of operations that can be implemented in hardware, software, or a combination thereof. In the context of software, the blocks represent computer-executable instructions that, when executed by one or more processors, cause the one or more processors to perform the recited operations. Generally, computer-executable instructions include routines, programs, objects, components, data structures, and the like that perform particular functions or implement particular abstract data types. The order in which the operations are described is not intended to be construed as a limitation, and any number of the described blocks can be combined in any order and/or in parallel to implement the process. Other processes described throughout this disclosure, including processes described hereinafter, shall be interpreted accordingly.

In the following discussion, electronic documents to be searched and ranked are discussed as web pages. However, process 400, and other processes described hereinbelow, are not limited to web pages. Further, in some embodiments, the process 400 may be practiced by the search provider 102 in a down/offline mode during which the search provider 102 does not respond to search-queries 104.

At 402, a sample set of web pages are retrieved from web servers for, among other things, providing training data for the key n-gram and/or phrase extraction model.

At 404, the sample set of web pages are pre-processed. Pre-processing of the sample set of web pages, which may be in HTML format, may include parsing the sample set of web pages and representing the parsed sample set of web pages as a sequence of tags/words. Pre-processing may further include converting the words into lower case and removing stopwords. Exemplary stop words include, but are not limited to, the following: a, a's, able, about, above, according, accordingly, across, actually, after, afterwards, again, against, aren't, all, allow, etc.

At 406, search-query log data 116 is retrieved from data store 114. The search-query log data 116 may be mined and may be used to identify head electronic documents and corresponding key n-grams based at least on the search-queries 104.

At 408, training data is generated based at least in part on the information mined from the retrieved search-query log data 116 and the pre-processed sample set of web pages. The search-query log data 116 represents implicit judgments of the users 106 on the relevance between the search-queries 104 and electronic documents 124, and consequently, the search-query log data 116 may be used for training the key n-gram and/or phrase extraction model. More specifically, if users 106 search with a search-query 104 and then afterwards click a web page listed in the search results 110, and this occurs many times (e.g., beyond a threshold), then it is very likely that the web page is relevant to the search-query 104. In this case, information such as words or phrases used in queries may be extracted from the web page. For head web pages, the search data log 116 may associate may search-queries with each head web pages, and such data may be used as training data for automatic extraction of queries for web pages, and may be particularly useful for tail pages.

The generated training data includes n-grams extracted from the web pages. In some instances, the n-grams in each of the search-queries 104 associated with a web page may be labeled key n-grams of the web page. For example, when a web page includes "ABDC" and is associated with a search-query for "ABC", unigrams "A", "B", "C", and bigrams "AB" may be labeled key n-grams and may be ranked higher than unigram "D", and bigrams "BD" and "DC" by the key n-gram and/or phrase extraction model.

At 410, n-gram and/or phrase features are extracted. Web pages contain rich formatting information when compared with plain texts. Both textual information and formatting information may be utilized to create features in the key n-gram and/or phrase extraction model (and may be used in the relevance ranking model) in order to conduct accurate key n-gram extraction. Below is a list of features which are found to be useful from an empirical study on 500 randomly selected web pages and the search-focused, or key, n-grams associated with them.

N-grams may be highlighted with different HTML formatting information, and the formatting information is useful for identifying the importance of n-grams.

## 1. Frequency Features

The original/normalized term frequencies of an n-gram within several fields, tags and attributes are utilized.

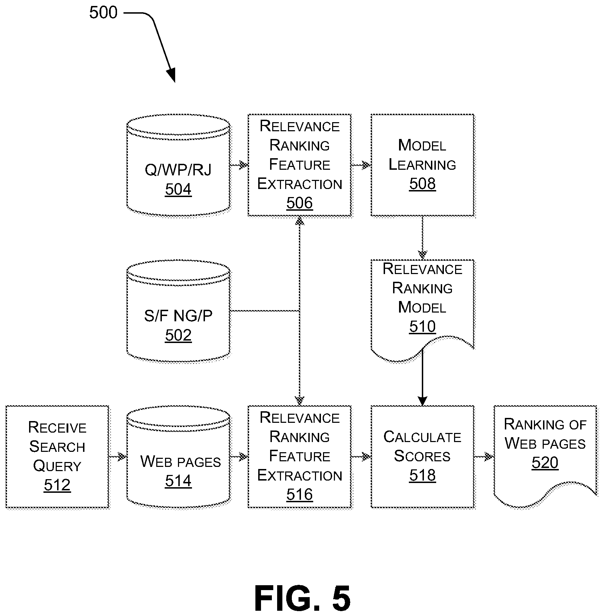

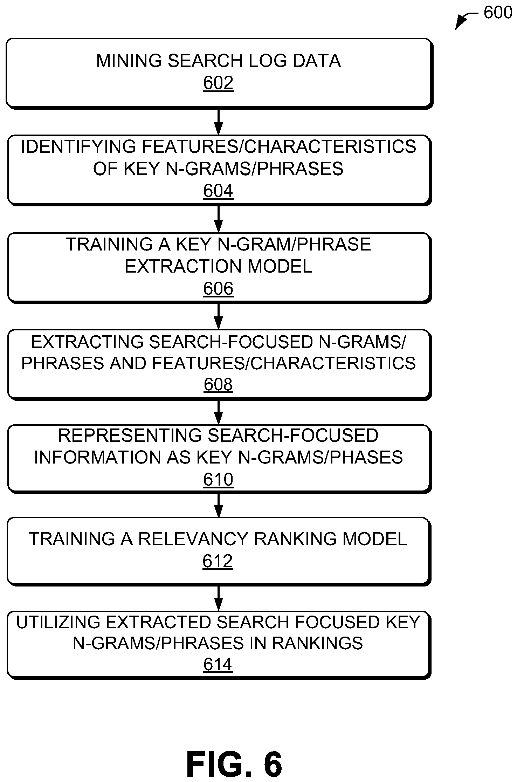

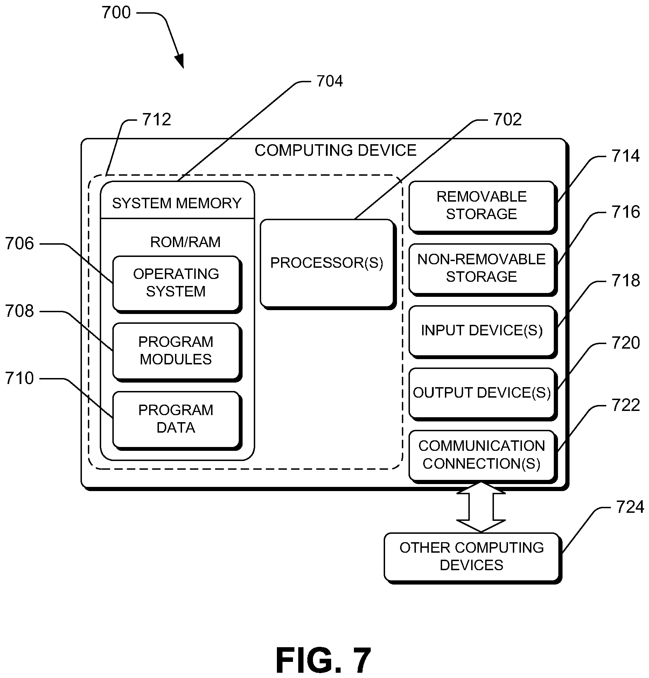

a) Frequency in Fields: the frequencies of n-gram in four fields of a web page: URL, page title, meta-keyword and meta-description.
b) Frequency within Structure Tags: the frequencies of n-gram in texts within header, table or list indicated by HTML tags including <h1>, <h2>, <h3>, <h4>, <h5>, <h6>, <table>, <li> and <dd>.
c) Frequency within Highlight Tags: the frequencies of n-gram in texts highlighted or emphasized by HTML tags including <a>, <b>, <i>, <em>, <strong>.
d) Frequency within Attributes of Tags: the frequencies of n-gram in attributes of tags of a web page. These texts are hidden texts which are not visible to the users. However, those texts are still valuable for key n-gram extraction, for example, the title of an image <img title="Still Life: Vase with Fifteen Sunflowers" ... />. Specifically, title, alt, href and src attributes of tags are used.
e) Frequencies in Other Contexts: the frequencies of n-gram in other contexts: 1) the headers of the page, which means n-gram frequency within any of <h1>, <h2>, ..., <h6> tags, 2) the meta-data field of the page, 3) the body of the page, 4) the whole HTML file.

## 2. Appearance Features

The appearances of n-grams are also important indicators of their importance.

a) Position: The first positions of an n-gram appearing in different parts of the page, including title, header, paragraph and whole document.
b) Coverage: The coverage of an n-gram in the title or a header, e.g., whether an n-gram covers more than 50% of the title.
c) Distribution: The distribution of an n-gram in different parts of a page. The page is separated into several parts and entropy of the n-gram across the parts is used.

At 412, the key n-gram and/or phrase extraction model is learned based at least on the extracted search-focused, or key, n-gram and/or phrases and/or the extracted n-gram and/or phrase features, characteristics, and/or data. The key n-gram and/or phrase extraction model may be formalized as a learning to rank problem. In learning, given a web page and key n-grams associated with the page, a ranking model is trained which can rank n-grams according to their relative importance of being key n-grams of the web page. Features are defined and utilized for the ranking of n-grams. In extraction, given a new web page and the trained model, the n-grams in the new web page are ranked with the model. For example, the key n-gram and/or phrase extraction model may be trained to identify n-grams as being key n-grams based at least in part on features and/or characteristics of key n-grams in the training data (e.g., location, font size, emphasized font (e.g., bold, italic, underlined, colored, etc.), frequency of occurrence, etc.). A web page may include many n-grams and/or phrases. These n-grams and/or phrase are first "candidate" n-grams and/or phrases. The key n-gram and/or phrase extraction model is trained to identify "key" n-grams and/or phrases from the "candidate" n-grams and/or phrases. In some instances, a web page may include M extracted n-grams and/or phrases of which the top K n-grams and/or phrases are selected as key n-grams of the web page. In some instances, the value of K may be in the range of 5-30. In some experiments for ranking experiments for varying values of K between 5-30, the ranking performance increases and then decrease with increasing K. The experiments indicated that the ranking performance is maximized around for K having an approximate value of 20. In some embodiments, each one of the key n-grams may be ranked and/or weighted, and the rank and/or weight may be used in calculating a relevancy score.

The search-focused extracted n-gram and/or phrase model based at least on the following formalization of a learning task. Let $X \in \mathbb{R}^p$ is the space of features of n-grams, while $Y = \{r_1\ r_2, ..., r_m\}$ is the space of ranks. There exists a total order among the ranks: $r_m > r_{m-1} > \cdots > r_1$. Here, m = 2, representing key n-grams and non key n-grams. The goal is to learn a ranking function f(x) such that for any pair of n-grams $(x_i, y_i)$ and $(x_j, y_j)$, the following condition holds:

$$f(x_i) > f(x_j) \Leftrightarrow y_i \succ y_j \qquad (1)$$

Here $x_i$ and $x_j$ are elements of X, and $y_j$ and $y_j$ are elements of Y representing the ranks of $x_i$ and $x_j$.

Machine learning methods such as Ranking support vector machine (SVM) may be employed to learn the ranking function f(x). In some embodiments, a tool such as SVM$^{Rank}$ may be employed. The function f(x) = w$^T$x is assumed to be a linear function on x.

Given the training set of data, the training data may be first converted into ordered pairs of n-grams: P = {(i, j)|(x$_i$, x$_j$), y$_i$ > y$_j$}, and the function f(x) is learned by the following optimization:

$$\widehat{\mathbf{w}} = \underset{\mathbf{w}}{\operatorname{argmin}} \frac{1}{2}\mathbf{w}^T\mathbf{w} + \frac{c}{|P|}\sum_{(i,j)\in P}\xi_{ij}$$
$$s.t. \quad \forall (i,j) \in P: \mathbf{w}^T\mathbf{x}_i - \mathbf{w}^T\mathbf{x}_j \geq 1 - \xi_{ij}, \; \xi_{ij} \geq 0 \tag{2}$$

where $\xi_{ij}$ denotes slack variables and c is a parameter.

At 414, the search-focused extracted n-gram and/or phrase model is provided. Having learned the search-focused extracted n-gram and/or phrase model, which may be based at least in part on a pre-determined number (K) of extracted n-grams and/or phrases, the search-focused extracted n-gram and/or phrase model is applied to data extracted from web pages.

At 416, web pages are retrieved from web servers.

At 418, the retrieved web pages are pre-processed.

At 420, n-gram and/or phrase features are extracted from the retrieved web pages.

At 422, the key n-gram and/or phrase extraction model is applied to the retrieved webpages to generate search-focused extracted n-grams and/or phrases data 118.

FIG. 5 is a flow diagram of an illustrative process 500 to provide relevancy rankings based at least in part on the extracted search-focused information generated by process 400.

At 502, the search-focused extracted n-grams and/or phrases data 118 is stored data store 114.

At 504, search-queries 104 and a sample set of web pages having relevance judgments associated therewith, and the corresponding relevance judgments are retrieved from a data store. The retrieved search queries, set of sample web pages and corresponding relevance judgments may be used in training a relevance ranking model. The set of sample web pages retrieved at 504 may be the same set of sample web pages retrieved at 402 or may be a different set of sample web pages.

At 506, relevance ranking features are extracted from the retrieved web pages based at least in part on search-focused extracted n-grams and/or phrases data 118.

Typically, in a web search, web pages may be represented in several fields, also referred to as meta-streams such as, but not limited to: (1) URL, (2) page title, (3) page body, (4) meta-keywords, (5) meta-description, (6) anchor texts, (7) associated queries in search-query log data and (8) key n-gram and/or phrase meta-stream generated by process 400. The first five meta-streams may be extracted from the web page itself, and they reflect the web designers' view of the web page. Anchor texts may extracted from other web pages and they may represent other web designer's summaries on the web page. Query meta-stream includes users' queries leading to clicks on the page and provides the search users' view on the web page. The n-gram and/or phrase meta-stream generated by process 400 also provides a summary of the web page. It should be noted that the key n-grams and/or phrases are extracted only based on the information from the first five meta-streams. The key n-gram and/or phrase extraction model may be trained mainly from head pages which have many associated queries as training data, and may be applied to tail pages which may not have anchor texts and associated queries.

A ranking model includes query-document matching features that represent the relevance of the document with respect to the query. Popular features include tf-idf, BM25, minimal span, etc. All of them can be defined on the meta-streams. Document features are also used, which describe the importance of document itself, such as PageRank, Spam Score.

Given a query and a document, the following query-document matching features may be derived from each meta-stream of the document:

a) Unigram/Bigram/Trigram BM25: N-gram BM25 is an extension of traditional unigram-based BM25
b) Original/Normalized PerfectMatch: Number of exact matches between query and text in the stream
c) Original/Normalized OrderedMatch: Number of continuous words in the stream which can be matched with the words in the query in the same order
d) Original/Normalized OrderedMatch: Number of continuous words in the stream which are all contained in the query
e) Original/Normalized QueryWordFound: Number of words in the query which are also in the stream

In addition, PageRank and domain rank scores are also used as document features in the relevance ranking model.

At 508, the relevance ranking model is trained based at least in part on training data provided from relevance ranking feature extraction. In some embodiments, learning to rank techniques may be employed to automatically construct the relevance ranking model from labeled training data for relevance ranking. In some embodiments, Ranking SVM may be used as the learning algorithm.

At 510, the trained relevance ranking model is provided and may be stored in data store 114.

At 512, a search-query 104 is received.

At 514, web pages corresponding to the received search-query 104 are retrieved.

At 516, relevance ranking features, characteristics, or data may be extracted from the retrieved web pages and/or from meta-streams, as discussed above, that represent the web pages including meta-streams for the search-focused extracted n-grams and/or phrases data 118. The relevance ranking features, characteristics, or data may be used to generate the query-document matching features between the query and the meta-streams of each web page such as, but not limited to, key n-gram/phrase weights. The relevance ranking features may be at least based on PageRank and domain rank scores for the retrieved web pages and/or the query-electronic document matching features from meta-streams of the electronic documents, as discussed above (Unigram/Bigram/Trigram BM25; Original/Normalized PerfectMatch; Original/Normalized OrderedMatch; Original/Normalized OrderedMatch; and Original/Normalized QueryWordFound).

At 518, the trained relevance ranking model is applied to the query-document matching features and the relevance ranking model calculates relevancy ranking scores for each of the web pages. In some instances, the relevance ranking model calculates relevancy ranking scores based at least in part on key n-gram/phrase weights.

At 520, a ranking of the web pages may be provided in the search results 110. The web pages may be ranked in descending order of their scores given by the relevance ranking model.

In some embodiments, some or all of blocks 502-510 of the process 500 may be practiced by the search provider 102 in a down/offline mode during which the search provider 102 does not respond to search-queries 104.

FIG. 6 is a flow diagram of another illustrative process 600 to extract search-focused information from electronic documents 154 and to provide rankings of search results.

At 602, the search provider 102 mines the search-query log data 116 for, among other things, search-focused information. The search provider 102 may identify head web pages and may identify relevant or key search-queries 104 from the search-query log data 116. Some search-queries 104 of a head web page may be less relevant than others. The search provider 102 may identify relevant or key search-queries 104 based at least on the number of times the search-query 104 is recorded in the search-query log data 116, the number of times web page was accessed by user 106 after the user 106 submits the search query, etc. The search provider 102 may designate some or all of the search-queries 104 as key n-grams and/or phrases.

At 604, the search provider 102 may identify features and/or characteristics of n-grams and/or phrases in a first set of retrieved web pages. Each web page may include multiple n-grams and/or phrases. The search provider 102 may rank/weigh the n-grams and/or phrases based at least in part on search focused information mined from the search-query log data 116. For example, the search provider 102 may rank/weigh the n-grams and/or phrases that match, at least partially or exactly, based at least on key search queries. The search provider may 102 identify n-grams and/or phrases of each electronic document as key n-grams and/or phrases or non-key n-grams and/or phrases based at least on various criteria such as, but not limited to, rankings/weights of n-grams and/or phrases, frequency of occurrence, etc. The search provider 102 may identify features, characteristics, and/or other data corresponding to key n-grams and/or phrases.

At 606, the search provider 102 may train a key n-gram/phrase extraction model. Training data for the key n-gram/phrase extraction model may include search-focused information mined from the search data log 116, search-focused information extracted from web pages, key n-grams and/or phrases, and key features and/or characteristics of n-grams and/or phrases.

At 608, the search provider 102 may extract search-focused information key n-grams and/or phrases from a second set of retrieved web pages and may also extract corresponding features and/or characteristics of the key n-grams and/or phrases. The first set of retrieved web pages may be a relatively small sample set that is retrieved for training the key n-gram/phrase extraction model. The extracted search-focused information key n-grams and/or phrases may be identified, and then extracted, based at least on comparisons, or similarities, to the features/characteristics of key n-grams/phrases for other key n-grams/phrases identified at 604. In other words, a first key n-gram/phrase in a first electronic document may have certain features/characteristics, and a second key n-gram/phrase in a second electronic document may be indentified based at least in part on the features/characteristics of the first key n-gram.

At 610, the search provider 102 may represent search-focused information as key n-grams and/or phrases. In some embodiments, the search provider 102 may represent the search-focused information as entries in the data structure 300.

At 612, the search provider 102 may train a relevancy ranking model. Training data for the relevancy ranking model may include key n-grams and/or phrases, features and/or characteristics of key n-grams and/or phrases, a third set of electronic documents, search-query log data 116, relevance judgments regarding electronic documents in the third set of electronic documents, etc.

At 614, the search provider 102 may utilize extracted search-focused information in relevance rankings. For example, the search provider 102 may utilize rankings and/or weights of key n-grams and/or phrases extracted from electronic documents.

### Illustrative Computing Device

FIG. 7 shows an illustrative computing device 700 that may be used by the search provider 102. It will readily be appreciated that the various embodiments described above may be implemented in other computing devices, systems, and environments. The computing device 700 shown in FIG. 7 is only one example of a computing device and is not intended to suggest any limitation as to the scope of use or functionality of the computer and network architectures. The computing device 700 is not intended to be interpreted as having any dependency or requirement relating to any one or combination of components illustrated in the example computing device.

In a very basic configuration, the computing device 700 typically includes at least one processing unit 702 and system memory 704. Depending on the exact configuration and type of computing device, the system memory 704 may be volatile (such as RAM), non-volatile (such as ROM, flash memory, etc.) or some combination of the two. The system memory 704 typically includes an operating system 706, one or more program modules 708, and may include program data 710. The program modules 708 may include a search engine, modules for training the key n-gram and/or phrase extraction model, the relevancy ranking model, etc. The program data 710 may include the search-query log data, the search-focused extracted n-grams and/or phrases data, and other data for training models, etc. The computing device 700 is of a very basic configuration demarcated by a dashed line 712. Again, a terminal may have fewer components but will interact with a computing device that may have such a basic configuration.

The computing device 700 may have additional features or functionality. For example, the computing device 700 may also include additional data storage devices (removable and/or non-removable) such as, for example, magnetic disks, optical disks, or tape. Such additional storage is illustrated in FIG. 7 by removable storage 714 and non-removable storage 716. Computer-readable media may include, at least, two types of computer-readable media, namely computer storage media and communication media. Computer storage media may include volatile and non-volatile, removable, and non-removable media implemented in any method or technology for storage of information, such as computer readable instructions, data structures, program modules, or other data. The system memory 704, the removable storage 714 and the non-removable storage 716 are all examples of computer storage media. Computer storage media includes, but is not limited to, RAM, ROM, EEPROM, flash memory or other memory technology, CD-ROM, digital versatile disks (DVD), or other optical storage, magnetic cassettes, magnetic tape, magnetic disk storage or other magnetic storage devices, or any other non-transmission medium that can be used to store the desired information and which can be accessed by the computing device 700. Any such computer storage media may be part of the computing device 700. Moreover, the computer-readable media may include computer-executable instructions that, when executed by the processor(s) 702, perform various functions and/or operations described herein.

In contrast, communication media may embody computer-readable instructions, data structures, program modules, or other data in a modulated data signal, such as a carrier wave, or other transmission mechanism. As defined herein, computer storage media does not include communication media.

The computing device 700 may also have input device(s) 718 such as keyboard, mouse, pen, voice input device, touch input device, etc. Output device(s) 720 such as a display, speakers, printer, etc. may also be included. These devices are well known in the art and are not discussed at length here.

The computing device 700 may also contain communication connections 722 that allow the device to communicate with other computing devices 724, such as over a network. These networks may include wired networks as well as wireless networks.

It is appreciated that the illustrated computing device 700 is only one example of a suitable device and is not intended to suggest any limitation as to the scope of use or functionality of the various embodiments described. Other well-known computing devices, systems, environments and/or configurations that may be suitable for use with the embodiments include, but are not limited to personal computers, server computers, handheld or laptop devices, multiprocessor systems, microprocessor-base systems, set top boxes, game consoles, programmable consumer electronics, network PCs, minicomputers, mainframe computers, distributed computing environments that include any of the above systems or devices, and/or the like. For example, some or all of the components of the computing device 700 may be implemented in a cloud computing environment, such that resources and/or services are made available via a computer network for selective use by the client-devices 108.

**Claims**

1. A computer-implemented method performed by a search provider (102),
the search provider (102) comprising a storage device (114, 704, 714, 716) storing search-focused data (118), which includes key n-grams and/or phrases, content locators and key n-gram/phrase weights,
wherein each key n-gram and/or phrase is extracted from at least one electronic document (124) of a plurality of electronic documents available over a network (112),
wherein the search-focused data (118) comprises for each key n-gram and/or phrase one or more content locators (304) that each identify a location of an electronic document (124) from which a corresponding extracted key n-gram and/or phrase was extracted,
wherein, in the search-focused data (118), a key n-gram/phrase weight is associated with each of the one or more content locators (304) and provides a measure of relevancy of the associated extracted key n-gram and/or phrase with respect to the electronic document (124) identified by the corresponding content locator (304),
the method comprising the acts of:

receiving (512) a search-query (104);
retrieving (514), in response to the search query (104), a number of electronic documents (124) from the plurality of electronic documents based at least in part on the search query (104);
calculating a relevancy ranking of the retrieved electronic documents for provision of a search result (110), comprising calculating the relevancy ranking of at least one electronic document of the retrieved electronic documents based at least in part on at least one key n-gram/phrase weight provided by the search-focused data (118) for the at least one electronic document of the retrieved electronic documents.

2. The method as recited in claim 1, wherein the search-focused data (118) is provided by a trained key n-gram and/or phrase extraction model (120, 414).

3. The method as recited in claim 2, the trained key n-gram and/or phrase extraction model (120, 414) being trained at least in part on training data mined from a search-query log (116, 406).

4. The method as recited in any of the preceding claims, wherein the storage device (114, 704, 714, 716) further stores a relevance ranking model (120, 510) that performs the act of calculating the relevancy ranking of the retrieved electronic documents , the relevance ranking model (120, 510) trained based at least in part on the search-focused data (118).

5. The method as recited in any of the preceding claims, wherein the electronic documents (124) are formatted in a hypertext markup language format.

6. The method as recited in any of the preceding claims, wherein the electronic documents (124) are web pages.

7. A computing system (700) comprising one or more processors (702) configured to carry out the method according to any of the preceding claims.

8. One or more computer-readable media (114, 704, 714, 716) storing computer-executable instructions, which, when executed on one or more processors (702), cause the one or more processors (702) to perform the method according to any of claims 1 to 6.


**Patentansprüche**

1. Computerimplementiertes Verfahren, das von einem Suchanbieter durchgeführt wird (102),
wobei der Suchanbieter (102) eine Speichervorrichtung (114, 704, 714, 716) umfasst, die suchorientierte Daten (118) speichert, die Schlüssel-n-Gramme und/oder Phrasen, Inhaltspositionsgeber und Schlüssel-n-Gramm/Phrasengewichte beinhalten,
wobei jedes Schlüssel-n-Gramm und/oder jede Phrase aus mindestens einem elektronischen Dokumenwt (124) einer Vielzahl von elektronischen Dokumenten extrahiert wird, die über ein Netzwerk (112) verfügbar sind,
wobei die suchorientierten Daten (118) für jedes Schlüssel-n-Gramm und/oder Satz ein oder mehrere Inhaltspositionsgeber (304) umfassen, die jeweils einen Ort eines elektronischen Dokuments (124) identifizieren, aus dem ein entsprechendes extrahiertes Schlüssel-n-Gramm und/oder Satz extrahiert wurde,

wobei in den suchorientierten Daten (118) jedem der einen oder mehreren Inhaltspositionsgeber (304) ein Schlüssel-n-Gramm /Phrasengewicht zugeordnet ist und ein Maß für die Relevanz des zugehörigen extrahierten Schlüssel-n-Gramms und/oder der Phrase in Bezug auf das elektronische Dokument (124), das durch den entsprechenden Inhaltspositionsgeber (304) identifiziert wurde, bereitstellt,

wobei das Verfahren die Handlungen von:

Empfangen (512) einer Suchanfrage (104);

Abrufen (514) einer Anzahl von elektronischen Dokumenten (124) aus der Vielzahl von elektronischen Dokumenten als Antwort auf die Suchanfrage (104), basierend zumindest teilweise auf der Suchanfrage (104);

Berechnen eines Relevanz-Rankings der abgerufenen elektronischen Dokumente zur Bereitstellung eines Suchergebnisses (110), umfassend das Berechnen des Relevanz-Rankings mindestens eines elektronischen Dokuments der abgerufenen elektronischen Dokumente basierend mindestens teilweise auf mindestens einem Schlüssel-n-Gramm/Phrasengewicht, das durch die suchorientierten Daten (118) für das mindestens eine elektronische Dokument der abgerufenen elektronischen Dokumente bereitgestellt wird.

2. Verfahren nach Anspruch 1, wobei die suchorientierten Daten (118) durch ein trainiertes Schlüssel-N-Gramm-und/oder Phrasen-Extraktionsmodell (120, 414) bereitgestellt werden.

3. Verfahren nach Anspruch 2, wobei das trainierte Schlüssel-n-Gramm- und/oder Phrasen-Extraktionsmodell (120, 414) zumindest teilweise auf Trainingsdaten trainiert wird, die aus einem Suchabfrageprotokoll (116, 406) gewonnen wurden.

4. Verfahren nach einem der vorstehenden Ansprüche, wobei die Speichervorrichtung (114, 704, 714, 716) ferner ein Relevanz-Rankingmodell (120, 510) speichert, das den Akt des Berechnens des Relevanz-Rankings der abgerufenen elektronischen Dokumente durchführt, wobei das Relevanz-Rankingmodell (120, 510) zumindest teilweise auf der Grundlage der suchorientierten Daten (118) trainiert wird.

5. Verfahren nach einem der vorstehenden Ansprüche, wobei die elektronischen Dokumente (124) in einem Hypertext-Markup-Sprachformat formatiert sind.

6. Verfahren nach einem der vorstehenden Ansprüche, wobei die elektronischen Dokumente (124) Webseiten sind.

7. Computersystem (700), umfassend einen oder mehrere Prozessoren (702), die konfiguriert sind, um das Verfahren nach einem der vorstehenden Ansprüche auszuführen.

8. Ein oder mehrere computerlesbare Medien (114, 704, 714, 716), die computerausführbare Anweisungen speichern, die, wenn sie auf einem oder mehreren Prozessoren (702) ausgeführt werden, bewirken, dass der eine oder die mehreren Prozessoren (702) das Verfahren nach einem der Ansprüche 1 bis 6 durchführen.

**Revendications**

1. Procédé mis en œuvre par ordinateur, réalisé par un fournisseur de recherche (102),
le fournisseur de recherche (102) comprenant un dispositif de stockage (114, 704, 714, 716) stockant des données de focalisation de recherche (118), qui incluent des n-grammes et/ou phrases clés, des localisateurs de contenu et des pondérations de n-gramme/phrase clé,
dans lequel chaque n-gramme et/ou phrase clé est extrait d'au moins un document électronique (124) d'une pluralité de documents électroniques disponibles dans un réseau (112),
dans lequel les données de focalisation de recherche (118) comprennent, pour chaque n-gramme et/ou phrase clé, un ou plusieurs localisateurs de contenu (304) qui identifient chacun un emplacement d'un document électronique (124) duquel a été extrait un n-gramme et/ou phrase clé extrait correspondant,
dans lequel, dans les données de focalisation de recherche (118), une pondération de n-gramme/phrase clé est associée à chacun des un ou plusieurs localisateurs de contenu (304) et fournit une mesure de la pertinence du n-gramme et/ou phrase clé extrait associé par rapport au document électronique (124) identifié par le localisateur de contenu correspondant (304),
le procédé comprenant les actions consistant à :

recevoir (512) une requête de recherche (104) ;

récupérer (514), en réponse à la requête de recherche (104), un nombre de documents électroniques (124) parmi la pluralité de documents électroniques sur la base au moins en partie de la requête de recherche (104) ; calculer un classement de pertinence des documents électroniques récupérés pour fournir un résultat de recherche (110), comprenant le calcul du classement de pertinence d'au moins un document électronique des documents électroniques récupérés sur la base au moins en partie d'au moins une pondération de n-gramme/phrase clé fournie par les données de focalisation de recherche (118) pour l'au moins un document électronique des documents électroniques récupérés.

**2.** Procédé selon la revendication 1, dans lequel les données de focalisation de recherche (118) sont fournies par un modèle entraîné d'extraction de n-gramme et/ou phrase clé (120, 414).

**3.** Procédé selon la revendication 2, le modèle entraîné d'extraction de n-gramme et/ou phrase clé (120, 414) étant entraîné au moins en partie sur des données d'entraînement extraites d'un journal de requêtes de recherche (116, 406).

**4.** Procédé selon l'une quelconque des revendications précédentes, dans lequel le dispositif de stockage (114, 704, 714, 716) stocke en outre un modèle de classement de référence (120, 510) qui réalise l'action de calculer le classement de pertinence des documents électroniques récupérés, le modèle de classement de pertinence (120, 510) entraîné sur la base au moins des données de focalisation de recherche (118).

**5.** Procédé selon l'une quelconque des revendications précédentes, dans lequel les documents électroniques (124) sont formatés dans un format de langage de balisage hypertexte.

**6.** Procédé selon l'une quelconque des revendications précédentes, dans lequel les documents électroniques (124) sont des pages Web.

**7.** Système informatique (700) comprenant un ou plusieurs processeurs (702) configurés pour effectuer le procédé selon l'une quelconque des revendications précédentes.

**8.** Un ou plusieurs supports lisibles par ordinateur (114, 704, 714, 716) stockant des instructions exécutables par ordinateur qui, lorsqu'elles sont exécutées sur un ou plusieurs processeurs (702), amènent les un ou plusieurs processeurs (702) à réaliser le procédé selon l'une quelconque des revendications 1 à 6.

FIG. 1

TITLE
SUBTITLE

200

202

FORMS      NEWS      LINKS      ABOUT US

(HEADLINES) (          SEARCH SITE          )

NAVIGATION
LINKS

206

204

MAIN CONTENT

NAVIGATION
LINKS

208

**FIG. 2**

300 —

## SEARCH-FOCUSED N-GRAM/PHRASE DATA 118

### KEY N-GRAM/PHRASE 302

#### CONTENT LOCATOR (1) 304

| FEATURE/DATA (1) 306 | • • • | FEATURE/DATA (N) 306 |

#### CONTENT LOCATOR (2) 304

| FEATURE/DATA (1) 306 | • • • | FEATURE/DATA (N) 306 |

•
•
•

### KEY N-GRAM/PHRASE 302

#### CONTENT LOCATOR (1) 304

| FEATURE/DATA (1) 306 | • • • | FEATURE/DATA (N) 306 |

#### CONTENT LOCATOR (2) 304

| FEATURE/DATA (1) 306 | • • • | FEATURE/DATA (N) 306 |

# FIG. 3

400 ⟶

```
                                    ┌─────────────┐
                                    │ SEARCH LOG  │
                                    │    DATA     │
                                    │    406      │
                                    └─────────────┘
                                           │
                                           ▼
┌─────────────┐   ┌─────────────┐   ┌─────────────┐   ┌─────────────┐
│  WEB PAGES  │──▶│    PRE-     │──▶│  TRAINING   │──▶│    NG/P     │
│    402      │   │ PROCESSING  │   │    DATA      │   │  FEATURE    │
│             │   │    404      │   │ GENERATION  │   │ EXTRACTION  │
└─────────────┘   └─────────────┘   │    408      │   │    410      │
                                    └─────────────┘   └─────────────┘
                                                             │
                                           ┌─────────────────┘
                                           ▼
                                    ┌─────────────┐   ┌─────────────┐
                                    │    MODEL    │──▶│  S/F NG/P   │
                                    │  LEARNING   │   │   MODEL     │
                                    │    412      │   │    414      │
                                    └─────────────┘   └─────────────┘
                                                             │
                                                             ▼
┌─────────────┐   ┌─────────────┐   ┌─────────────┐   ┌─────────────┐
│  WEB PAGES  │──▶│    PRE-     │──▶│    NG/P     │──▶│   SEARCH    │
│    416      │   │ PROCESSING  │   │  FEATURE    │   │  FOCUSED    │
│             │   │    418      │   │ EXTRACTION  │   │   NG/P      │
└─────────────┘   └─────────────┘   │    420      │   │    422      │
                                    └─────────────┘   └─────────────┘
```

# FIG. 4

500 ⟋

**FIG. 5**

600

```
┌─────────────────────────────────────────┐
│          MINING SEARCH LOG DATA          │
│                   602                    │
└─────────────────────────────────────────┘
                     │
                     ▼
┌─────────────────────────────────────────┐
│  IDENTIFYING FEATURES/CHARACTERISTICS    │
│       OF KEY N-GRAMS/PHRASES             │
│                   604                    │
└─────────────────────────────────────────┘
                     │
                     ▼
┌─────────────────────────────────────────┐
│     TRAINING A KEY N-GRAM/PHRASE         │
│          EXTRACTION MODEL                │
│                   606                    │
└─────────────────────────────────────────┘
                     │
                     ▼
┌─────────────────────────────────────────┐
│   EXTRACTING SEARCH-FOCUSED N-GRAMS/     │
│  PHRASES AND FEATURES/CHARACTERISTICS    │
│                   608                    │
└─────────────────────────────────────────┘
                     │
                     ▼
┌─────────────────────────────────────────┐
│      REPRESENTING SEARCH-FOCUSED         │
│  INFORMATION AS KEY N-GRAMS/PHASES       │
│                   610                    │
└─────────────────────────────────────────┘
                     │
                     ▼
┌─────────────────────────────────────────┐
│   TRAINING A RELEVANCY RANKING MODEL     │
│                   612                    │
└─────────────────────────────────────────┘
                     │
                     ▼
┌─────────────────────────────────────────┐
│ UTILIZING EXTRACTED SEARCH FOCUSED KEY   │
│     N-GRAMS/PHRASES IN RANKINGS          │
│                   614                    │
└─────────────────────────────────────────┘
```

# FIG. 6

700

704

712

702

714

COMPUTING DEVICE

SYSTEM MEMORY

ROM/RAM

706

OPERATING
SYSTEM

PROCESSOR(S)

REMOVABLE
STORAGE

716

NON-REMOVABLE
STORAGE

718

708

PROGRAM
MODULES

INPUT DEVICE(S)

720

710

PROGRAM
DATA

OUTPUT DEVICE(S)

722

COMMUNICATION
CONNECTION(S)

724

OTHER COMPUTING
DEVICES

# FIG. 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20100169305 A1, Patterson
- US 20100082582 A1, Gao
- US 20100082510 A1, Gao